(19) Europäisches Patentamt

European Patent Office

Office européen des brevets

(11) **EP 1 359 394 A1**

(12) **EUROPÄISCHE PATENTANMELDUNG**

(43) Veröffentlichungstag:
**05.11.2003 Patentblatt 2003/45**

(51) Int Cl.7: **G01D 5/34**, G01L 11/02

(21) Anmeldenummer: **02405353.0**

(22) Anmeldetag: **30.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB RESEARCH LTD.**
**8050 Zürich (CH)**

(72) Erfinder:
• **Bohnert, Klaus**
**5452 Oberrohrdorf (CH)**

• **Haroud, Karim**
**1512 Chavannes-sur-Moudon VD (CH)**
• **Frank, Andreas**
**8037 Zürich (CH)**
• **Brändle, Hubert**
**8102 Oberengstringen (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(54) **Hochauflösender Faserlaser-Sensor**

(57) Ein hochauflösender Faserlaser-Sensor zur Messung einer Messgrösse M weist eine Pumplichtquelle (2), einen Faserlaser (1) und eine Detektions-Auswerte-Einheit (3) auf. Der Faserlaser (1) weist auf: einen doppelbrechenden ersten Endreflektor (11), einen zweiten Endreflektor (12), eine laserverstärkende Faser (13), eine Sensorfaser (14) und ein Mittel zur Modenkopplung (15). Die laserverstärkende Faser (13), die Sensorfaser (14) und das Mittel zur Modenkopplung (15) sind zwischen den Endreflektoren (11,12) angeordnet. In dem Faserlaser (1) ist Licht in zwei, aufgrund ihrer Polarisation und/oder ihrer transversalen Raumstruktur zueinander orthogonalen Lichtzustände (x,y; LP'$_{01}$,LP'$_{11}$) ausbreitungsfähig. Durch das Mittel zur Modenkopplung (15) sind die orthogonalen Lichtzustände (x,y; LP'$_{01}$,LP'$_{11}$) miteinander koppelbar. In dem Faserlaser (1) sind in jedem der zwei Lichtzustände (x,y; LP'$_{01}$,LP'$_{11}$) mehrere Longitudinalmoden (LM$^x_p$, LM$^x_{p+1}$..., LM$^y_q$, LM$^y_{q+1}$...; LM$^{01}_p$, LM$^{01}_{p+1}$..., LM$^{11}_q$, LM$^{11}_{q+1}$...) schwingungsfähig. Durch Zusammenwirken der Messgrösse (M) mit der Sensorfaser (14) ist in der Sensorfaser (14) eine Änderung der Doppelbrechung für die zwei orthogonalen Lichtzustände (x,y; LP'$_{01}$, LP'$_{11}$) erzielbar. Aus der Änderung der Doppelbrechung resultiert eine Änderung von Schwebungsfrequenzen in der Laseremission. Dadurch, dass der erste Endreflektor (11) gegenüber dem zweiten Endreflektor (12) verstimmt ist, können einzelne Polarisationsmode-Schwebungs-Signale statt eines aus mehreren entarteten PMB-Signalen bestehenden und darum verbreiterten Schwebungs-Signals detektiert werden. Es wird eine hohe Sensor-Auflösung erzielt.

**Fig. 1**

EP 1 359 394 A1

**Beschreibung**

Technisches Gebiet

Die Erfindung bezieht sich auf das Gebiet der faseroptischen Sensorik. Sie bezieht sich auf einen Faserlaser-Sensor gemäss dem Oberbegriff des Patentanspruches 1 und auf ein entsprechendes Verfahren zur Messung einer Messgrösse gemäss dem Oberbegriff des Patentanspruches 10.

Stand der Technik

Ein derartiger, den Oberbegriff des Patentanspruches 1 bildender faseroptischer Sensor ist beispielsweise aus der Offenlegungsschrift EP 106 03 72 bekannt. Dort ist ein Sensor offenbart, der insbesondere zum Messen von Drücken geeignet ist und eine Pumplichtquelle, einen Fabry-Perot-Faserlaser, eine Detektionseinheit, eine Auswerteeinheit und mehrere Zuführungsfasern umfasst. Die Zuführungsfasern verbinden unter anderem die Pumplichtquelle mit dem Faserlaser und den Faserlaser mit der Detektionseinheit. Der Faserlaser besteht aus zwei als Faser-Bragg-Gitter (FBG) ausgebildeten Endreflektoren und einer Laserfaser. Die Laserfaser umfasst eine laserverstärkende Faser und eine Sensorfaser. Die Pumplichtquelle regt die $Er^{3+}$-dotierte laserverstärkende Faser optisch an und erzeugt eine Besetzungsinversion. Der Faserlaser schwingt in zwei zueinander orthogonalen Polarisationsrichtungen. Für jede Polarisationsrichtung besteht das Lichtfeld des Lasers aus einem oder mehreren Longitudinalmoden. Wird die Sensorfaser dem zu messenden Druck ausgesetzt, so wird eine dazu proportionale Veränderung der Doppelbrechung für die zwei zueinander orthogonalen Lichtzustände erzielt. Die Sensorfaser weist dafür eine nichtrotationssymmetrische Struktur auf, beispielsweise einen elliptischen Kern. Die zueinander orthogonalen Polarisationrichtungen x,y des Lasers sind parallel zu den Hauptachsen der Doppelbrechung ausgerichtet.

Wenn Licht aus dem Laser ausgekoppelt und in einem Analysator der Detektionseinheit zur Interferenz gebracht wird, so erhält man ein Frequenzspektrum, das ausser den im Bereich um $10^{14}$ Hz liegenden und deshalb nicht direkt messbaren Lichtfrequenzen auch noch tieferfrequente, messbare Schwebungssignale enthält. Diese umfassen einerseits Longitudinalmoden-Schwebungssignale (LMB-Signale, longitudinal mode beat signals), die durch die Interferenz zwischen verschiedenen Longitudinalmoden desselben Lichtzustandes (Polarisation) entstehen. Die tieffrequentesten dieser Signale liegen typischerweise im 50 MHz- bis 5 GHz-Bereich. Andererseits gibt es noch die Polarisationsmoden-Schwebungssignale (PMB-Signale, polarization mode beat signals), die sich aus der Interferenz zwischen den Longitudinalmoden verschiedener Lichtzustände (Polarisationen) ergeben. Die Frequenz der PMB-Signale ändert sich in guter Näherung proportional zu der durch eine Druckänderung induzierten Doppelbrechung. Somit erhält man ein frequenzkodiertes druckproportionales Mess-Signal.

In einer speziellen Ausführungsform des Drucksensors aus der genannten EP 106 03 72 besteht die Laserfaser aus zwei gleichartigen doppelbrechenden Fasersegmenten, die um 90° gegeneinander verdreht sind. Nur eines der zwei Segmente, nämlich dasjenige, das als Sensorfaser dient, wird dem zu messenden Druck ausgesetzt. Temperatureinflüsse, die auf beide Fasersegmente wirken, löschen sich aufgrund des 90°-Spleisses aus. Dann kann der Druck unbeeinflusst von Temperaturschwankungen gemessen werden. Ohne den 90°-Splice führten diese Temperaturschwankungen zu Messungenauigkeiten.

Der Frequenzabstand zweier benachbarter Longitudinalmoden desselben Lichtzustandes in dem Faserlaser ist aufgrund der Dispersionseigenschaften der Fasermaterialien und anderer Effekte, beispielsweise "frequncy pulling", nicht ganz konstant, sondern leicht frequenzabhängig. Wenn also im Faserlaser mehrere Longitudinalmoden schwingen und diese Effekte für die beiden Polarisationsrichtungen etwas unterschiedlich sind, wird das zu einer kleinen Frequenzverbreiterung des Mess-Signals führen. Diese liegt typischerweise im Bereich unter 10 Hz pro Frequenzabstand benachbarter Longitudinalmoden. In der genannten EP 106 03 72 wird zur Verbesserung des Auflösungsvermögens des Sensors vorgeschlagen, den Einfluss der Dispersion im Faserlaser zu minimieren, indem die Zahl der im Faserlaser schwingenden Longitudinalmoden auf wenige Moden verringert wird. Dies kann durch Wahl einer kurzen Kavitätslänge sowie durch die Verwendung schmalbandiger FBG mit beispielsweise 200 pm Bandbreite als Endreflektoren erreicht werden.

In den Patentschriften US 5'513'913 und US 5'564'832 sowie in dem Artikel von G.A. Ball et al., "Polarimetric heterodyning Bragg-grating fiber-laser sensor", Optics Letters 18 (22), S.1976-1978, werden ähnlich aufgebaute Sensoren, insbesondere Dehnungssensoren, vorgestellt. In der letztgenannten Schrift wird eine Verringerung der Linienbreite der PMB-Signale dadurch erreicht, dass die Zahl der schwingenden Longitudinalmoden durch die Wahl einer kurzen Kavitätslänge von 2.5 cm und den Einsatz schmalbandig reflektierender FBG reduziert wird. Linienbreiten von PMB-Signalen von weniger als 2.5 kHz wurden so erreicht.

In dem Artikel "Polarization control of polarimetric fiber-laser sensors", Opt. Lett. 18, 1465 (1993), von H.K. Kim, S.K. Kim und B.Y. Kim wird ein Faserlaser-Sensor vorgestellt, der Standard-Spiegel als Endreflektoren aufweist. Weil der Faserlaser ausserdem eine grosse Laserkavitätslänge von 340 cm hatte, war eine grosse Zahl Longitudinalmoden aktiv. Unter diesen Umständen führte die Doppelbrechung der Laserfaser zu Problemen in der Interpretation der Signal-Spektren, da LMB-Signale und PMB-Signale sich im Spektrum stark überlappten. Durch einen 90°-Splice in der Laserfaser-Mitte konnten diese Probleme minimiert werden. Für einen solchen Sensor wurden Linienbreiten für PMB-Signale von 1.2 MHz erreicht, entsprechend $4 \times 10^{-2}$ des freien spektralen Bereichs (FSR, free spectral range) des Laserresonators.

In US 5'448'657 wird ein ähnlicher, mit PMB-Signal-Detektion arbeitender Faserlaser-Sensor beschrieben.

Bei allen zuvor genannten, auf mehreren Longitudinalmoden pro Lichtzustand (Polarisation) schwingenden Fabry-Perot-Faserlaser-Sensoren ergibt sich eine Begrenzung der Auflösung durch eine Verbreiterung der PMB-Signale. Diese Verbreiterung ergibt sich daraus, dass die zu verschiedenen Longitudinalmoden-Paaren gehörenden PMB-Signale, die einen gewöhnlicherweise gemessenen PMB-Peak einer gegebenen Ordnung bilden, nicht perfekt entartet sind. Insbesondere ergeben sich im Falle doppelbrechender Laserfasern starke Linienverbreiterungen.

Darstellung der Erfindung

Es ist deshalb Aufgabe der Erfindung, einen Faserlaser-Sensor der eingangs genannten Art und ein entsprechendes Messverfahren zu schaffen, welche die oben genannten Nachteile nicht aufweisen. Insbesondere soll eine hohe Messgenauigkeit, eine kostengünstige Herstellung und eine vielseitige Anwendbarkeit erreicht werden.

Diese Aufgabe löst ein Faserlaser-Sensor mit den Merkmalen des Patentanspruches 1 und ein Verfahren mit den Merkmalen des Patentanspruches 10.

In dem erfindungsgemässen Sensor sind die beiden Endreflektoren gegeneinander verstimmt. Weil der Faserlaser-Sensor das Mittel zur Modenkopplung umfasst und mindestens der erste Endreflektor doppelbrechend ist, kann die weitgehende Entartung der PMB-Signale für jede Ordnung aufgehoben werden. Der Frequenzabstand zwischen benachbarten Longitudinalmoden in einem ersten der zwei orthogonalen Lichtzustände ist grösser als der Frequenzabstand zwischen benachbarten Longitudinalmoden in dem zweiten der zwei orthogonalen Lichtzustände. Die Entartung der PMB-Signale einer gegebenen Ordnung kann so weit aufgehoben werden, dass sich diese PMB-Signale nicht (oder kaum) überlappen und somit einzeln detektierbar sind. Ein erster Endreflektor des Faserlasers ist gegenüber dem zweiten Endreflektor verstimmt ist, so dass dadurch eine Entartung von detektierten Schwebungssignalen aufgehoben ist. Es kann also ein Signal detektiert und ausgewertet werden, das durch die Interferenz zwischen genau zwei Longitudinalmoden entsteht; dabei haben diese beiden Longitudinalmoden entweder zwei unterschiedliche, zueinander orthogonale Zustände linearer Polarisation oder weisen zwei zueinander orthogonale transversale Raumstrukturen auf. Die Linienbreite des detektierten Signals ist aufgrund der gegenseitigen Verstimmung der Endreflektoren deutlich verringert. Eine verbesserte Auflösung wird so erreicht.

Mess-Signale können in tiefen Frequenzbereichen und mit einer entsprechend kostengünstigen Auswerteelektronik ausgewertet werden, wobei dennoch ein hohes Auflösungsvermögen erzielt wird. Es ist auch möglich, bei einem erfindungsgemässen Sensor unter Einsatz einer einfacheren und entsprechend kostengünstigeren Auswerteelektronik dieselbe Auflösung zu erzielen wie mittels einer aufwendigeren Auswerteelektronik bei einem aus dem Stand der Technik bekannten Sensor. Dass in einem erfindungsgemässen Sensor ein Laser mit einer langen Laser-Kavität verwendet werden kann, ermöglicht einerseits ein hohes Auflösungsvermögen. Andererseits erlaubt es auch eine grosse Interaktionslänge des Sensors mit der Messgrösse und ermöglicht eine vielseitige Anwendbarkeit des Sensors.

Ein wichtiger Aspekt sind die Phasenverschiebungen, die das Licht bei Reflexion an den Endreflektoren erfährt. Die Summe der ersten Ableitungen (nach der Frequenz) der Phasenverschiebung $\varphi$ bei Reflexion an dem ersten und dem zweiten Endreflektor ist für Licht, das sich in einem ersten der zwei orthogonalen Lichtzustände befindet, grösser ist als für Licht, das sich in dem zweiten der zwei Lichtzustände befindet. Wenn die Endreflektoren derartig ausgebildet sind, dass diese Bedingung erfüllt ist, wird die erfindungsgemässe Entartungsaufhebung und Auflösungsverbesserung erreicht. Eine Möglichkeit, die Endreflektoren derartig auszubilden, ist es, die Endreflektoren gegeneinander zu verstimmen. Die Dispersion der Phasenverschiebung $\varphi$ bei Reflexion bedeutet dabei die Ableitung der Phasenverschiebung $\varphi$ nach der Frequenz $\nu$ (bei der Frequenz, mit der der entsprechende Lichtzustand im Laser schwingt).

In einer bevorzugten Ausführungsform des Erfindungsgegenstandes sind die zwei im Laser ausbreitungsfähigen orthogonalen Lichtzustände zwei lineare Polarisationsmoden. Als Mittel zur Modenkopplung dient dann vorzugsweise ein 90°-Faser-Spleiss. Vorzugsweise weisen die beiden Polarisationsmoden dieselbe transversale Raumstruktur auf.

In einer weiteren bevorzugten Ausführungsform des Erfindungsgegenstandes sind die zwei im Laser schwingungsfähigen orthogonalen Lichtzustände zwei transversale Raummoden, insbesondere $LP_{01}$ und $LP_{11}{}^{\text{gerade}}$. Als Mittel zur Modenkopplung dient dann vorzugsweise ein seitlich versetzter Faser-Spleiss. Vorzugsweise habe diese beiden orthogonalen Raummoden dieselbe lineare Polarisation.

In einer weiteren bevorzugten Ausführungsform des Erfindungsgegenstandes sind genau zwei orthogonale Lichtzustände im Faserlaser ausbreitungsfähig. Dadurch kann der Sensor mit einer geringen Pumpleistung und/oder mit einer nur gering dotierten Laserfaser betrieben werden. Und die Signalauswertung wird auf diese Weise vereinfacht.

In einer weiteren bevorzugten Ausführungsform ist der Faserlaser symmetrisch aufgebaut: Die gesamte Laserfaser ist eine Faser mit ellitpischem Kernquerschnitt und wirkt als laserverstärkende Faser. Die beiden Endreflektoren sind als bis auf die gegenseitige Verstimmung gleichartige doppelbrechende Faser-Bragg-Gitter ausgebildet, die in die laserverstärkende Faser eingeschrieben sind. Das Mittel zur Modenkopplung ist in der Mitte der optischen Weglänge zwischen den beiden Endreflektoren angeordnet, und der zwischen einem der Endreflektoren und dem Mittel zur Modenkopplung angeordnete Teil der laserverstärkenden Faser dient als Sensorfaser. Ein derartiger, symmetrisch aufgebauter Sensor hat den Vorteil, gegen Temperaturschwankungen und andere symmetrisch auf die beidseitig des Mittels zur Modenkopplung angeordneten Segmente der Laserfaser wirkende Störeinflüsse stabilisiert zu sein.

In einer weiteren Ausführungsform weist der Sensor ein Verstimmungsmittel auf, mit Hilfe dessen die gegenseitige Verstimmung der Endreflektoren einstellbar ist. Dadurch kann einerseits die Grösse der Verstimmung der Messung angepasst werden und andererseits die Verstimmung konstant gehalten werden. Bevorzugt wird die Verstimmung der Endreflektoren bei deren Herstellung erzeugt.

Weitere bevorzugte Ausführungsformen gehen aus den abhängigen Patentansprüchen und den Figuren hervor.

Kurze Beschreibung der Zeichnungen

Im folgenden wird der Erfindungsgegenstand anhand der beiliegenden Zeichnungen näher erläutert. Es zeigen:

Fig. 1      eine schematische Darstellung eines erfindungsgemäss Sensors;

Fig. 2a, 2b      eine schematische Darstellung der Reflexionspeaks der Endreflektoren eines erfindungsgemässen Sensors mit linearpolarisierten Lichtzuständen;

Fig. 3a-d      eine schematische Darstellung der Reflexionspeaks der Endreflektoren eines Sensors mit linearpolarisierten Lichtzuständen für

     3a:      unverstimmte Endreflektoren und x-Polarisation,

     3b:      unverstimmte Endreflektoren und y-Polarisation,

     3c:      verstimmte Endreflektoren und x-Polarisation,

     3d:      verstimmte Endreflektoren und y-Polarisation;

Fig.4a      ein Transmissionsspektrum eines Faser-Bragg-Gitters, gemesssen (durchgezogene Linie) und berechnet (gestrichelte Linie);

Fig. 4b      Phasenverschiebung $\varphi$ bei Reflexion am Faser-Bragg-Gitter aus Fig. 4a in Abhängigkeit von der Wellenlänge $\lambda$, berechnet (gestrichelte Linie) und beispielhafte Werte (Dreiecke, Quadrate);

Fig. 5a      ein Frequenzspektrum der Longitudinalmoden in x- und für yPolarisation für verstimmte und für unverstimmte Endreflektoren, schematisch;

Fig. 5b      ein Frequenzspektrum der Schwebungssignale eines erfindungsgemässen Sensors mit verstimmten Endreflektoren, ausgehend von dem Spektrum aus Fig. 5a, schematisch;

Fig.5c      ein Frequenzspektrum der Longitudinalmoden in $LP'_{01}$- und $LP'_{11}$-Raummoden für verstimmte und für unverstimmte Endreflektoren, schematisch;

Fig. 5d      ein Frequenzspektrum der Schwebungssignale eines erfindungsgemässen Sensors mit verstimmten Endreflektoren, ausgehend von dem Spektrum aus Fig. 5c, schematisch;

Fig. 6      Frequenzabstand $\delta\nu_{PMB}$ der erfindungsgemässen PMB-Signale einer gegebenen Ordnung, in Abhängigkeit von der Verstimmung der Endreflektoren, gemessen und berechnet;

Fig. 7      ein gemessenes Frequenzspektrum von Schwebungssignalen eines Sensors mit Detail-Ausschnitts-Messungen von PMBSignalen für verschieden grosse gegenseitige Verstimmungen der Endreflektoren.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

Wege zur Ausführung der Erfindung

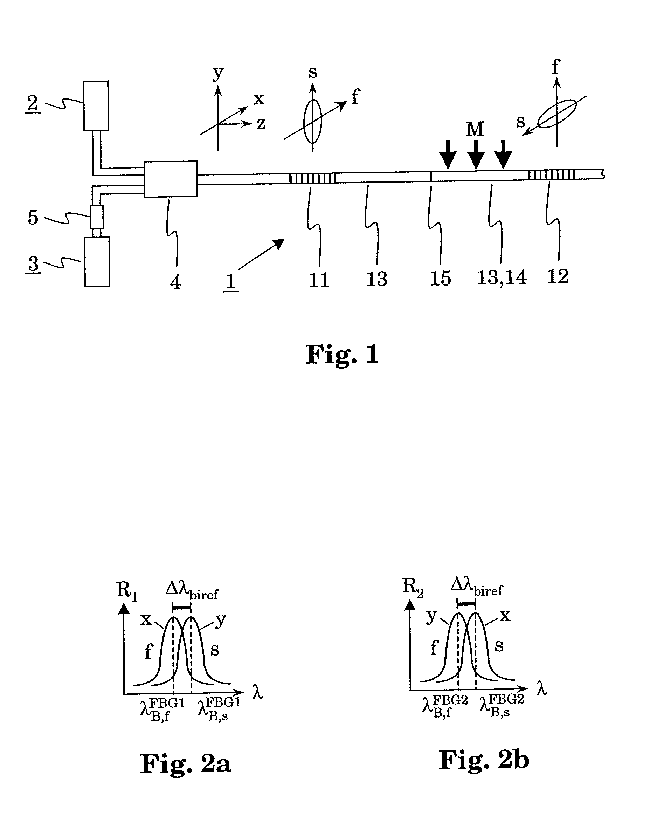

Fig. 1 zeigt schematisch einen erfindungsgemässen Sensor zur Messung einer Messgrösse M. Ausser einem Faserlaser 1 umfasst der Sensor einen Pumplaser als Pumplichtquelle 2 für den Faserlaser 1 und eine Detektions-Auswerte-Einheit 3. Ein Faserkoppler 4 verbindet über Verbindungsfasern den Faserlaser 1 mit diesen beiden Komponenten 2,3. Zwischen dem Faserkoppler 4 und der Detektions-Auswerte-Einheit 3 ist vorteilhaft noch ein optischer Isolator zwischengeschaltet. Im folgenden werden im wesentlichen nur Details des Faserlasers 1 diskutiert. Details über die anderen Komponenten des Sensors und über das Zusammenwirken der verschiedenen Komponenten des Sensors können dem einschlägigen Stand der Technik und insbesondere der eingangs zitierten EP 106 03 72 entnommen werden. Letztere wird darum hierdurch mit ihrem gesamten Offenbarungsgehalt in die Beschreibung übernommen.

Der Faserlaser 1 ist hergestellt aus einer $Er^{3+}$-dotierten optischen Faser mit elliptischem Kernquerschnitt. In diese Laserfaser ist ein erstes Faser-Bragg-Gitter (FBG) und ein zweites FBG holographisch eingeschrieben. Das erste FBG stellt einen ersten Endreflektor 11 des Faserlasers 1 dar, und das zweite FBG einen zweiten Endreflektor 12. Die beiden FBG 11,12 sind wegen ihres elliptischen Kernquerschnittes doppelbrechend bezüglich linearer Polarisation und bis auf eine gegenseitige Verstimmung gleichartig ausgebildet. In der Mitte zwischen den beiden FBG 11,12 ist die Laserfaser auseinandergeschnitten und um 90° verdreht wieder zusammengespleisst. Dadurch befindet sich in der Mitte zwischen den beiden FBG 11,12 ein 90°-Spleiss 15. Dieser dient als Mittel zur Modenkopplung 15. Somit sind auch die Achsen der FBG 11,12 um 90° gegeneinander verdreht. Die gesamte zwischen den FGB 11,12 angeordnete Laserfaser dient als laserverstärkende Faser 13. Das Fasersegment 14 zwischen dem 90°-Spleiss 15 und dem zweitem FBG 12 ist ganz oder teilweise der Messgrösse M aussetzbar und dient somit als Sensorfaser 14.

Die Raumachsen x,y,z sind in Fig. 1 skizziert, wobei z entlang der Faserachse ausgerichtet ist. Für das erste FBG 11 liegt die langsame (lange) Achse s parallel zu y. Und die schnelle (kurze) Achse f liegt entlang x. Für das zweite FBG 12 sind die Verhältnisse wegen des 90°-Spleisses 15 umgekehrt: Die langsame (lange) Achse s ist entlang x ausgerichtet, während die schnelle (kurze) Achse f entlang y verläuft. Diese Verhältnisse sind in Fig. 1 skizziert.

In Fig. 2a und 2b sind die Reflexionsvermögen $R_1, R_2$ der Endreflektoren 11,12 schematisch dargestellt. Fig. 2a zeigt das Reflexionsvermögen $R_1$ des ersten FBG 11. Aufgrund der Doppelbrechung des FBG 11 gibt es für Licht, das entlang der schnellen Achse f polarisiert ist, einen Reflexionspeak bei einer kürzeren Wellenlänge $\lambda_{B,f}{}^{FBG1}$ als für Licht, das entlang der langsamen Achse s polarisiert ist. Der Wellenlängenabstand $\Delta\lambda_{biref}$ zwischen den beiden Reflexions-Peak-Wellenlängen (Bragg-Wellenlängen) beträgt

$$\Delta\lambda_{biref} = \lambda_{B,f}{}^{FBG1} - \lambda_{B,s}{}^{FBG1}.$$

Für das zweite FBG 12 sind die Verhältnisse in Fig. 2b dargestellt. Wie schon in Fig. 1 diskutiert ist für das zweite FBG 12 die Zuordnung der Faserachsen s,f zu den Raumachsen x,y gerade umgekehrt wie für das erste FBG 11. Da in dem vorliegenden Ausführungsbeispiel die beiden FBG 11,12 bis auf eine gegenseitige Verstimmung identisch ausgebildet sind, liegen die Reflexionspeaks zwar nicht bei denselben Wellenlängen ($\lambda_{B,f}{}^{FBG1} \neq \lambda_{B,f}{}^{FBG2}$ und $\lambda_{B,s}{}^{FBG1} \neq \lambda_{B,s}{}^{FBG2}$), aber die Reflexionspeaks für das zweite FBG 12 und somit die Bragg-Wellenlängen sind um dasselbe

$$\Delta\lambda_{biref} = \lambda_{B,f}{}^{FBG2} - \lambda_{B,s}{}^{FBG2}.$$

voneinander beabstandet.

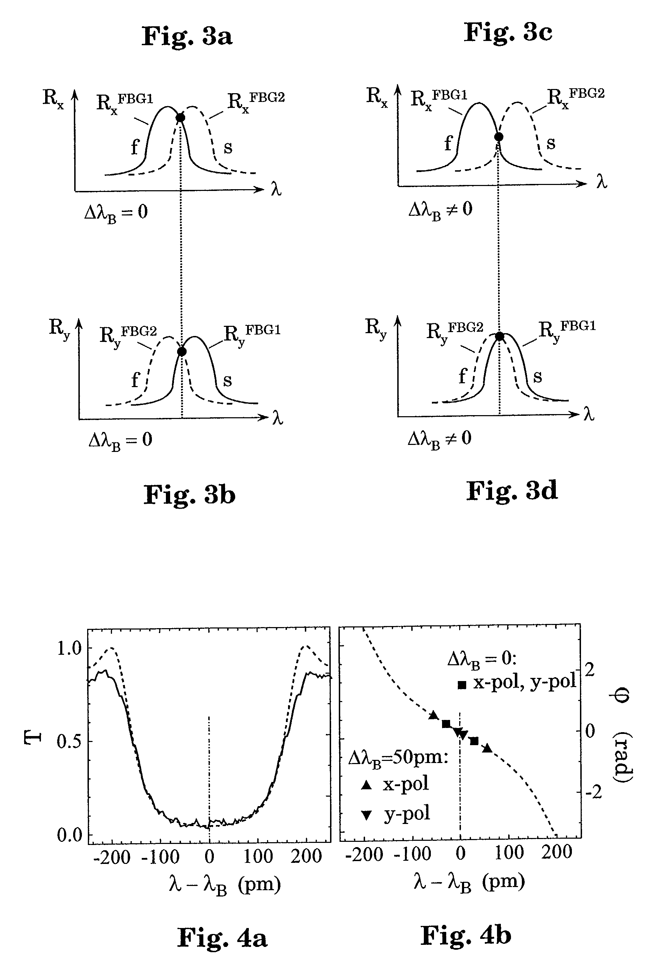

Anhand von Fig. 3a-d wird die gegenseitige Verstimmung der FBG 11,12 erläutert. Die Fig. 3a und 3b zeigen zunächst den aus dem Stand der Technik bekannten Fall, dass die beiden FBG 11,12 dieselbe Bragg-Wellenlänge aufweisen. Der Unterschied in der Bragg-Wellenlänge, $\Delta\lambda_B$, beträgt somit

$$\Delta\lambda_B = \lambda_{B,f}{}^{FBG2} - \lambda_{B,f}{}^{FBG1} = \lambda_{B,s}{}^{FBG2} - \lambda_{B,s}{}^{FBG1} = 0.$$

Fig. 3a zeigt das Reflexionsvermögen der FBG 11,12 für entlang der x-Achse linearpolarisiertes Licht. Fig. 3b zeigt das Reflexionsvermögen der FBG 11,12 für entlang der y-Achse linearpolarisiertes Licht. Bei der durch die dicken Punkte und die gepunktete Linie gekennzeichneten Wellenlänge ist das Produkt der Reflexionsvermögen der beiden FBG 11,12 maximal und somit Resonatorverluste minimal, so dass der Laser auf dieser Wellenlänge schwingt. Aufgrund der Gleichartigkeit der FBG 11,12 und der Gleichartigkeit der Reflexionspeaks für die beiden Polarisationen x, y schwingt der Faserlaser 1 für x- und für y-Polarisation auf derselben Wellenlänge.

Fig. 3c und 3d zeigen den erfindungsgemässen Fall, dass die Braggwellenlänge des ersten FBG 11 von der Braggwellenlänge des zweiten FBG 12 verschieden ist, also

$$\Delta\lambda_B = abs(\lambda_{B,f}{}^{FBG2} - \lambda_{B,f}{}^{FBG1}) = abs(\lambda_{B,s}{}^{FBG2} - \lambda_{B,s}{}^{FBG1}) \neq 0.$$

Die Reflexionspeaks der beiden FBG 11,12 für x-polarisiertes Licht sind in diesem Fall weiter beabstanded als die Reflexionspeaks der beiden FBG 11,12 für y-polarisiertes Licht. Die Wellenlängen, auf denen der Faserlaser 1 schwingt sind aber immer noch gleich für x- und y-Polarisation (gestrichelte Linie, dicke Punkte).

Fig. 4a und 4b verdeutlicht, warum dies zu einem unterschiedlichen Dispersionen und unterschiedlichen Phasenverschiebungen $\varphi$ bei Reflexion an den FBG für x- und y-polarisiertes Licht führen kann. Fig. 4a zeigt die normierte Transmissionskurve T für ein FBG; T = 1 - R. Das experimentell gemessene Spektrum ist durch die durchgezogene Linie dargestellt; das berechnete Spektrum ist gestrichelt dargestellt. Die Wellenlängenachse (unten) ist bei der Bragg-Wellenlänge $\lambda_B$, genauer: bei der Zentral-Wellenlänge des jeweils massgeblichen Reflexionspeaks, genullt.

Fig. 4b zeigt die Wellenlängenabhängigkeit der (relativen) Phasenverschiebung $\varphi$ bei Reflexion an dem FBG von Fig. 4a. Die Phasenverschiebung $\varphi$ ist relativ zu der Phasenverschiebung bei der Bragg-Wellenlänge $\lambda_B$ angegeben. Die gestrichelte S-förmige Linie ist eine berechnete Kurve. Als Beispiele sind die im Faserlaser 1 für $\Delta\lambda_B = 0$ und für $\Delta\lambda_B = 50$ pm auftretenden Werte von $\varphi$ durch Quadrate beziehungsweise Dreiecke gekennzeichnet.

Für nicht-verstimmte FBG 11,12 ($\Delta\lambda_B = 0$) liegen die Wellenlängen, auf denen der Faserlaser 1 schwingt, für x- und y-Polarisation gleich weit vom Nullpunkt der relativen Wellenlänge $\lambda-\lambda_B$ entfernt (kleine Quadrate). Als Beispiel war $\Delta\lambda_{biref} = 60$ pm gewählt. Dies ist auch der schematischen Darstellung von Fig. 3a und 3b entnehmbar. Der erfindungsgemässe Fall, dass die FBG 11,12 gegeneinander verstimmt sind, ist durch die kleinen Dreiecke dargestellt. Es war $\Delta\lambda_B = 50$ pm gewählt. Die Wellenlängen, auf denen der Faserlaser 1 schwingt, liegen für x- und y-polarisiertes Licht verschieden weit vom Nullpunkt der relativen Wellenlänge $\lambda-\lambda_B$ entfernt (kleine Dreiecke). Dies ist auch der schematischen Darstellung von Fig. 3c und 3d entnehmbar. Die Wellenlängen, auf denen der Faserlaser 1 schwingt, befinden sich stets bei

$$\lambda - \Delta\lambda_B = \pm(\Delta\lambda_{biref} \pm \Delta\lambda_B)/2.$$

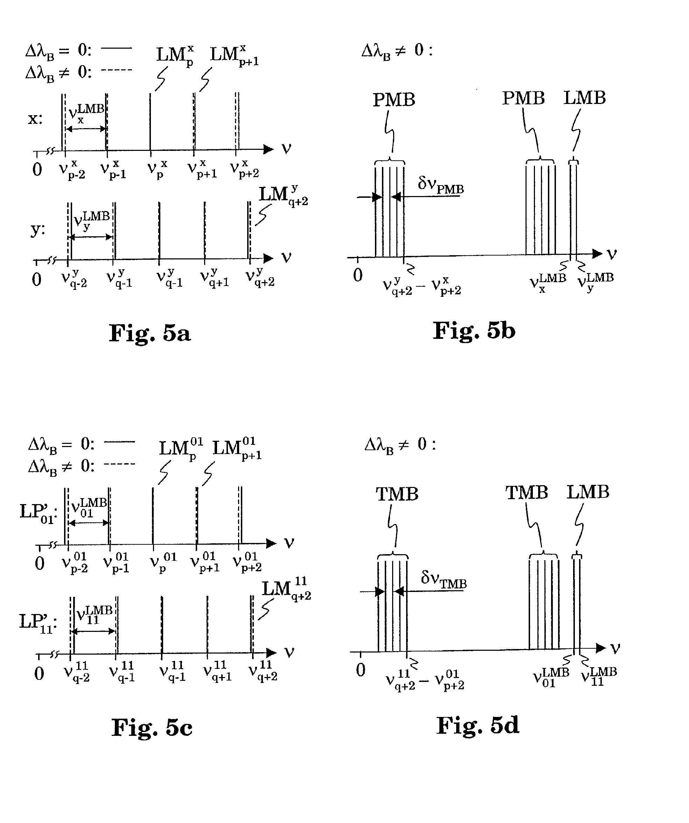

Aufgrund der unterschiedlichen Steigungen der Kurve $\varphi(\lambda-\lambda_B)$ für x- und y-Polarisation ergeben sich, wie im folgenden gezeigt wird, in einer erfindungsgemässen Vorrichtung für x- und y-Polarisation verschieden grosse Frequenzabstände $\nu_x^{LMB}, \nu_y^{LMB}$ zwischen benachbarten Longitudinalmoden (siehe auch Fig. 5a). Die Resonanzbedingungen im Faserlaser 1 können für x-Polarisation geschrieben werden als

$$2\pi p = \varphi_f^{FBG\,1}\left(\nu_p^x\right) + 4\pi\nu_p^x\ n_f L_1/c\ + 4\pi\nu_p^x\ n_s L_2/c + \varphi_s^{FBG\,2}\left(\nu_p^x\right)$$

und analog für y-Polarisation

$$2\pi q = \varphi_s^{FBG\,1}\left(\nu_q^y\right) + 4\pi\nu_q^y\ n_s L_1/c\ + 4\pi\nu_q^y\ n_f L_2/c + \varphi_f^{FBG\,2}\left(\nu_q^y\right)$$

Dabei bedeutet:

p      ganze Zahl; Ordnung der Longitudinalmoden in x-Polarisation
q      ganze Zahl; Ordnung der Longitudinalmoden in y-Polarisation
$\varphi_{s,f}$      Phasenverschiebung bei Reflexion am FBG für Licht in s-, f-Polarisation
$\nu_p^x$      Frequenz eines x-polarisierten Longitudinalmodes der Ordnung p
$\nu_q^y$      Frequenz eines y-polarisierten Longitudinalmodes der Ordnung q
$n_{s,f}$      effektiver Brechungsindex der Laserfaser für s-, f-Polarisation
$L_{1,2}$      geometrische Länge des Laserfaser-Segments zwischen dem 90°-Spleiss und dem ersten, zweiten FBG
c      Lichtgeschwindigkeit im Vakuum

Dispersioneffekte (für den Brechungesindex) in der Laserfaser sind vernachlässigbar klein und werden deshalb in den obigen Gleichungen für die Resonanzbedingungen nicht aufgeführt.

Zunächst der aus dem Stand der Technik bekannte Fall. Wenn die beiden FBG11,12 dieselbe Bragg-Wellenlänge haben, also $\Delta\lambda_B = 0$, und wenn ausserdem die beiden Laserfaser-Segmente gleich lang sind, also $L_1 = L_2$, dann ist der Frequenzabstand $\nu_x^{LMB}$ zwischen benachbarten Longitudinalmoden $LM_p^x$, $LM_{p+1}^x$ für x-Polarisation gleich dem Frequenzabstand $\nu_y^{LMB}$ zwischen benachbarten Longitudinalmoden $LM_q^y$, $LM_{q+1}^y$ für y-Polarisation:

$$\nu_x^{LMB} = \nu_{p+1}^x - \nu_p^x = \nu_{q+1}^y - \nu_q^y = \nu_y^{LMB}$$

Die Signale der Longitudinalmoden-Schwebungen (LMB, longitudinal mode polarization beating) sind also für beide Polarisationen x,y gleich. Die Signale der Polarisationsmoden-Schwebungen (PMB, polarization mode beating) liegen bei Frequenzen $\nu^{PMB} = abs(\nu_p^x - \nu_q^y)$ und sind in diesem Falle für jede Ordnung p-q entartet.

In Fig. 5a veranschaulichen die durchgezogenen Linien diese Frequenzverhältnisse schematisch. In der Praxis ist die Entartung der einzelnen PMB-Signale einer gegebenen Ordnung natürlich nie perfekt, weil es immer unvermeidliche Asymmetrien, beispielsweise der FBG, und weitere Effekte wie "frequency pulling" gibt. Dies führt zu einer ungewünschten Verbreiterung der detektierten PMB-Signale und einer entsprechend schlechten Sensor-Auflösung. Insbesondere, wenn die beiden Laserfaser-Segmente nicht gleich lang sind, also $L_1 \neq L_2$, kann der Unterschied $\nu_x^{LMB} - \nu_y^{LMB}$ der LMB-Frequenzen für x- und y-Polarisation bis in den Bereich einiger Kilohertz gehen. Dies führt allerdings ebenfalls zu einer ungenauen Messung.

Fig. 5a zeigt auch den erfindungsgemässen Fall, dass die FBG 11,12 gegeneinander verstimmt sind: $\Delta\lambda_B \neq 0$ (gestrichelte Linien). Den Fig. 3c und 3d ist entnehmbar, dass der Laser für x- und y-Polarisation mit Frequenzen schwingt, die an verschiedenen Stellen der Kurve $\varphi(\lambda-\lambda_B)$ liegen. Wie weiter unten erläutert werden wird, sind darum die Steigungen der Kurve $\varphi(\lambda-\lambda_B)$ für x- und y-Polarisation verschieden gross, so dass sich für die beiden Polarisationen x,y deutlich verschiedene Frequenzen $\nu_x^{LMB}, \nu_y^{LMB}$ zwischen benachbarten Longitudinalmoden $LM_p^x$, $LM_{p+1}^x$; $LM_q^y$, $LM_{q+1}^y$ ergeben. Dadurch ergibt sich eine deutliche Aufhebung der Entartung der PMB-Signale für jede Ordnung p-q.

Fig. 5b zeigt schematisch ein Frequenzspektrum bis zum LMB-Signal erster Ordnung, wie es sich für den erfindungsgemässen Fall $\Delta\lambda_B \neq 0$ aus Fig. 5a ergibt. Das LMB-Signal erster Ordnung setzt sich aus zwei Peaks zusammen: Einem ersten Peak bei $\nu_x^{LMB}$, der sich aus der Interferenz zwischen benachbarten x-polarisierten Longitudinalmoden $LM_{p+1}^x$ und $LM_p^x$ für verschiedene Ordnungen p ergibt; und einem zweiten Peak bei $\nu_y^{LMB}$, der sich aus der Interferenz zwischen benachbarten y-polarisierten Longitudinalmoden $LM_{q+1}^y$ und $LM_q^y$ für verschiedene Ordnungen q ergibt. Die Entartung der PMB-Signale einer gegebenen Ordnung ist aufgehoben, so dass es ermöglicht wird, diese PMB-Peaks getrennt (einzeln) zu detektieren. Ein solches, einzelnes PMB-Signal ergibt sich durch die Interferenz genau eines x-polarisierten Longitudinalmodes $LM_p^x$ mit genau einem y-polarisierten Longitudinalmode $LM_q^y$. Die zu einer gegebenen Ordnung p-q gehörenden einzelnen PMB-Signale sind frequenzmässig in erster Näherung gleichmässig beabstandet mit einem Frequenzabstand von $\delta\nu_{PMB}$, wobei $\delta\nu_{PMB}$ als $\delta\nu_{PMB} = abs(\nu_x^{LMB} - \nu_y^{LMB})$ gegeben ist. $\delta\nu_{PMB}$ liegt typischerweise bei einigen 10 kHz bis mehreren 100 kHz.

In guter Näherung ist $\delta\nu_{PMB}$ im Fall $L_1 = L_2$ gegeben als

$$\delta\nu_{PMB} = abs\left( \frac{\left.\frac{\partial\varphi}{\partial\nu}\right|_{\frac{1}{2}(\Delta\nu_{biref}+\Delta\nu_B)} - \left.\frac{\partial\varphi}{\partial\nu}\right|_{\frac{1}{2}(\Delta\nu_{biref}-\Delta\nu_B)}}{\pi(2nL/c)^2} \right)$$

Dabei ist $\Delta\nu_{biref} = (c/\lambda^2)\cdot\Delta\lambda_{biref}$ die zu $\Delta\lambda_{biref}$ korrespondierende Frequenz und $\Delta\nu_B = (c/\lambda^2)\cdot\Delta\lambda_B$ die zu $\Delta\lambda_B$ korrespondierende Frequenz. n ist der gemittelte effektive Brechungsindex der Laserfaser $n = (n_s + n_f)/2$, und $L = L_1 + L_2$ ist die gesamte Länge der Laserfaser. Gemäss der Gleichung ist $\delta\nu_{PMB}$ proportional zu der Differenz der ersten Ableitung der Phasenverschiebung $\varphi$ nach der Frequenz bei Frequenzen, die um $\frac{1}{2}(\Delta\nu_{biref} + \Delta\nu_B)$ beziehungsweise um $\frac{1}{2}(\Delta\nu_{biref} - \Delta\nu_B)$ von der zur Bragg-Wellenlänge $\lambda_B$ korrespondierenden Frequenz $\nu_B$ verschieden sind. Vergleiche dazu auch die durch die Dreiecke gekennzeichnete Lage der Peaks in Fig. 4b. Die erste Ableitung der Phasenverschiebung $\varphi(\nu)$ nach der Frequenz $\nu$ wird hier als Dispersion $\partial\varphi/\partial\nu$ der Phasenverschiebung $\varphi$ bezeichnet.

Bei der Herleitung der Gleichung wurde angenommen, dass die Frequenzabhängigkeit der Phasenverschiebung $\varphi(\nu)$ punktsymmetrisch zu ($\nu=\nu_B$ ; $\varphi=0$) ist, und dass $\varphi(\nu)$ in einem kleinen Frequenzbereich nahe den Frequenzen, auf denen der Faserlaser 1 schwingt, gut linear approximiert werden kann. Da die Frequenzabhängigkeit der Phasenverschiebung $\varphi$ im allgemeinen nichtlinear ist, sind die beiden in der Gleichung vorkommenden Ableitungsterme nie exakt gleich, so dass für $\Delta\lambda_B \neq 0$ stets ein nichtverschwindender Frequenzabstand $\delta\nu_{PMB}$ erzielbar ist.

Für den Fall, dass die optischen Weglängen zwischen dem Mittel zur Modenkopplung 15 und dem ersten Endreflektor 11 beziehungsweise zwischen dem Mittel zur Modenkopplung 15 und dem zweiten Endreflektor 12 verschieden sind, kommt noch ein weiterer Beitrag zu dem Abstand zwischen den einzelnen PMB-Signalen einer gegebenen Ordnung hinzu. Dieser Beitrag ist aber typischerweise kleiner als etwa 10 kHz und wird darum hier nicht weiter betrachtet.

Berücksichtigt man auch noch die zweite Ableitung der Phasenverschiebung $\varphi$, so ergibt sich sich, dass die longitudinalen Modenabstände $v_x{}^{LMB}$, $v_y{}^{LMB}$ für jeden der Lichtzustände x,y nicht exakt gleich sind, sondern sich etwas mit der Ordnungszahl p beziehungsweise q verändern. Jede Linie der in Fig. 5b dargestellten Schwebungssignale PMB,LMB weist deshalb eine (nicht dargestellte) Feinaufspaltung auf, und die Frequenzabstände $\delta v_{PMB}$ zwischen benachbarten PMB-Signalen einer gegebenen Ordnung sind nicht alle exakt gleich. Da diese Feinaufspaltung klein ist, wird dieser Sachverhalt hier vernachlässigt.

Für den Fall, dass die beiden Endreflektoren 11,12 unterschiedliche Dispersionen $\partial\varphi_1/\partial v$, $\partial\varphi_2/\partial v$ aufweisen, ergibt sich analog zu der obigen Gleichung für $\delta v_{PMB}$ in guter Näherung, dass $\delta v_{PMB}$ proportional zu der Differenz zweier Terme ist. Dabei ist jeder dieser Terme für eine der zwei orthogonalen Polarisationen x,y die Summe aus der Dispersion $\partial\varphi_1/\partial v$ für Reflexion am ersten Endreflektor 11 und der Dispersion $\partial\varphi_2/\partial v$ für Reflexion am zweiten Endreflektor 12, jeweils bei den betreffenden Frequenzen, auf denen der Faserlaser 1 schwingt. Wenn also die Endreflektoren 11,12 derart ausgebildet sind, dass die Dispersion $\partial\varphi_1/\partial v$ der Phasenverschiebung $\varphi$ bei Reflexion an dem ersten Endreflektor 11 plus der Dispersion $\partial\varphi_2/\partial v$ der Phasenverschiebung $\varphi$ bei Reflexion an dem zweiten Endreflektor 12 für einen der zwei Lichtzustände x,y grösser ist als für den anderen, so ist $\delta v_{PMB} \neq 0$.

Die Erfindung kann nicht nur mit Lichtzuständen, die aufgrund ihrer Polarisation zueinander orthogonal sind, durchgeführt werden. Es ist auch möglich, mit Lichtzuständen zu arbeiten, die aufgrund ihrer transversalen Raumstruktur zueinander orthogonal sind. Der Begriff "orthogonal" ist also nicht als rechtwinklig im Sinne von 90° aufzufassen, sondern wird im mathematischen Sinne gebraucht: für zueinander orthogonale Basisfunktionen oder Lichtzustände, aus welchen sich durch Linearkombination ein beliebiger Lichtzustand der entsprechenden Art, beispielsweise ein Lichtzustand mit einer beliebigen transversalen Raumstruktur, darstellen lässt. Die $LP_{mn}$-Moden können darum verwendet werden. Sie sind zwar nur eine (gute) Approximation zur Beschreibung der transversalen Raumstruktur, aber sie sind auch in guter Näherung zueinander orthogonal. Es können beispielsweise die transversalen Raummoden $LP_{01}$ und $LP_{11}{}^{gerade}$ anstelle der oben stets diskutierten entlang s oder f linear polarisierten Moden eingesetzt werden. Statt eines 90°-verdrehten Spleisses 15 dient dann vorzugsweise ein seitlich versetzter Faserspleiss 15 als Mittel zur Modenkopplung 15. Durch das Mittel zur Modenkopplung 15 wird Licht im $LP_{01}$-Zustand überführt in Licht im $LP_{11}{}^{gerade}$-Zustand. Der seitlich versetzte Spleiss 15 und auch der 90°-Spleiss 15 ist vorteilhaft derart ausgebildet, dass die Kopplung der beiden orthogonalen Lichtzustände möglichst vollständig, grösser als 60%, besser grösser als 80% ist.

Da aus der Literatur für die transversalen Raummoden keine zu den Raumachsen x,y analoge Bezeichnung bekannt ist, die auf beiden Seiten des Mittels zur Modenkopplung 15 anwendbar wäre, werden hierfür Bezugszeichen $LP'_{01}$ und $LP'_{11}{}^{gerade}$ eingeführt: $LP'_{01}$ kennzeichnet den Zustand desjenigen Lichtfeldes, das zwischen dem ersten Endreflektor 11 und dem Mittel zur Modenkopplung 15 im Raummode $LP_{01}$ schwingt und zwischen dem zweiten Endreflektor 11 und dem Mittel zur Modenkopplung 15 im Raummode $LP_{11}{}^{gerade}$ schwingt. $LP'_{11}{}^{gerade}$ (oder kurz $LP'_{11}$) kennzeichnet den Zustand desjenigen Lichtfeldes, das zwischen dem ersten Endreflektor 11 und dem Mittel zur Modenkopplung 15 im Raummode $LP_{11}{}^{gerade}$ schwingt und zwischen dem zweiten Endreflektor 11 und dem Mittel zur Modenkopplung 15 im Raummode $LP_{01}$ schwingt.

In Fig. 5c und 5d sind ganz analog zu den Fig. 5a und 5b die Frequenzspektren der Longitudinalmoden beziehungsweise der Schwebungssignale für $LP'_{01}$ und $LP'_{11}{}^{gerade}$ als orthogonale Lichtzustände dargestellt. Der Übersichtlichkeit halber werden abgekürzte Indices verwendet: "01" für $LP'_{01}$ und "11" für $LP'_{11}{}^{gerade}$. Die im Sensor detektierten Schwebungssignale zwischen Longitudinalmoden $LM^{01}{}_p$ und $LM^{11}{}_q$ verschiedener transversaler Raumstruktur $LP'_{01}$ und $LP'_{11}{}^{gerade}$ werden als TMB (transversal mode beating) bezeichnet, analog zu den im Falle linearer Polarisation im Sensor detektierten PMB-Signalen.

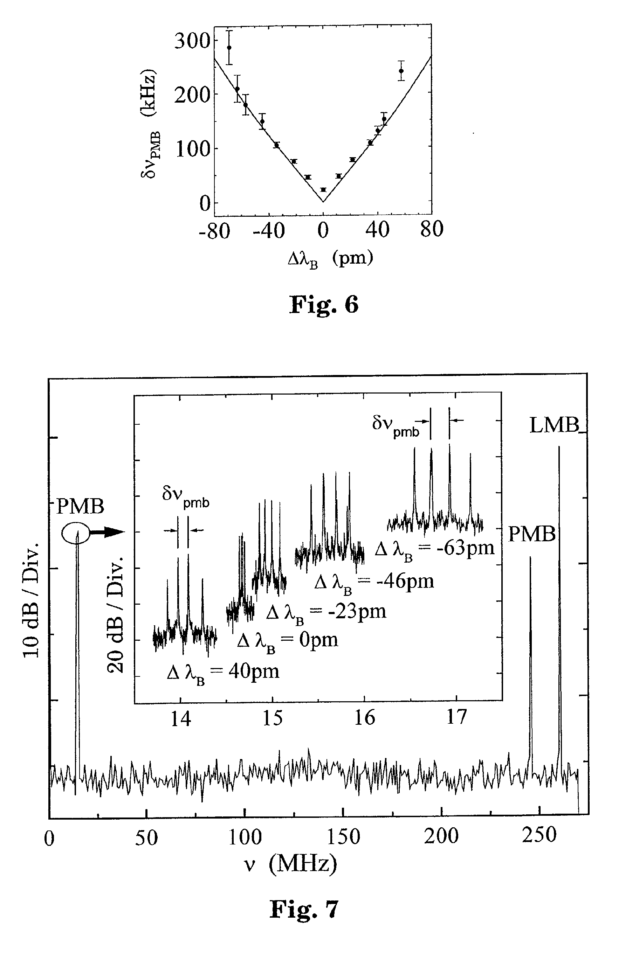

In Fig. 6 zeigt die durchgezogene Linie eine berechnete $\Delta\lambda_B$-Abhängigkeit der Frequenzaufspaltung $\delta v_{PMB}$. Die mit Fehlerbalken versehenen Punkte sind experimentell bestimmte Werte. Durch geeignete Wahl der gegenseitigen Verstimmung der FBG 11,12 kann also ein gewünschter, für eine durchzuführende Messung geeigneter Frequenzabstand $\delta v_{PMB}$ gewählt werden. Der Frequenzabstand $\Delta v_{PMB}$ kann so gross gewählt werden, dass keine Überlappung der verschiedenen PMB-Signale einer gegebenen Ordnung vorliegt, und dass die einzelnen PMB-Signale eindeutig zuordnbar sind. Natürlich muss die Frequenzauflösung der Detektions-Auswerte-Einheit 3 grösse sein als der Frequenzabstand $\delta v_{PMB}$.

Fig. 7 zeigt ein mit einem erfindungsgemässen, mit linearer Polarisation arbeitenden Sensor gemessenes Frequenzspektrum bis zum LMB-Signal erster Ordnung, das bei etwa 260 MHz liegt. Die beiden gemessenen PMB-Signale sind bei etwa bei 15 MHz und bei etwa 245 MHz erkennbar. Man kann das Spektrum gut mit der schematischen Darstellung von Fig. 5b vergleichen, wobei allerdings in der Fig. 5b fünf Longitudinalmoden pro linearem Polarisationsmode x,y schwingen statt vier in Fig. 7. In dem mit höherer Frequenzauflösung gemessenen Detail-Spektrum im Bereich um 15 MHz ist die aufgrund der gegenseitigen Verstimmung der FBG 11,12 aufgehobene Entartung der einzelnen PMB-Signale deutlich erkennbar. Für fünf verschiedene Werte von $\Delta\lambda_B$ zwischen 40 pm und -63 pm wurde das PMB-Signal nahe 15 MHz gemessen und dargestellt. Der Abstand $\delta\nu_{PMB}$ benachbarter PMB-Signale einer gegebenen Ordnung ändert sich deutlich mit $\Delta\lambda_B$, wie bereits in Fig. 6 gezeigt. Das nicht-perfekte Verschwinden von $\delta\nu_{PMB}$ bei $\Delta\lambda_B = 0$ ist vorwiegend darauf zurückzuführen, dass der experimentelle Aufbau stark unsymmetrisch war: $L_1 = 5$ cm und $L_2 = 35$ cm.

Die Bragg-Wellenlänge $\lambda_B$ eines FBG ändert sich mit der Temperatur. Zur Einstellung der verschiedenen Verstimmungen $\Delta\lambda_B$ wurden darum zwei voneinander unabhängige Rohröfen benutzt, die jeweils eines der zwei FBG 11,12 umgaben. Mittels dieser als ein Verstimmungmittel dienenden Rohröfen konnte die Temperatur jedes der beiden FBG 11,12 einzeln gewählt und konstant gehalten werden.

Zur Messung der Messgrösse M wird die Sensorfaser 14 dem Einfluss dieser Messgrösse M, beispielsweise einem hydrostatischen Druck in einem Erdöl-Bohrloch, ausgesetzt. In Fig. 1 ist dies durch die dicken Pfeile bei M dargestellt. Durch das Zusammenwirken der Messgrösse M mit der Sensorfaser 14 ändert sich die Doppelbrechung für die beiden Polarisationen x,y;s,f in der Sensorfaser 14. Vorteilhaft wird der Sensor derart eingestellt, dass er bei verschwindender Messgrösse M (M=0) eine verschwindende Gesamt-Doppelbrechung hat. Das heisst, dass bei M=0 die PMB-Signale ungefähr mit den LMB-Signalen zusammenfallen. Aufgrund der gegenseitigen Verstimmung der FBG kann dann mittels der Detektions-Auswerte-Einheit 3 nahe 0 Hz eines von mehreren separaten PMB-Signalen statt eines breiten, aus mehreren praktisch entarteten PMB-Signalen derselben Ordnung bestehenden PMB-Signales detektiert werden. Vorteilhaft können aus Redundanzgründen zur weiteren Verbesserung der Auflösung auch mehrere der separaten PMB-Signale detektiert und ausgewertet werden. Wird nun die Doppelbrechung der Sensorfaser 14 durch den zu messenden Druck verändert, so wird das detektierte einzelne PMB-Signal seine Frequenz proportional zu der Druckänderung erhöhen. Da es, wie auch aus den Fig. 5b und 5d ersichtlich ist, ein weiteres PMB-Signal gibt, das in analoger Weise von etwa $\nu_x^{LMB}$ oder $\nu_y^{LMB}$ bei M=0 seine Frequenz ungefähr proportional zur Druckänderung verringert, werden diese beiden PMB-Signale bei weiterer Druckerhöhung zusammenfallen, und zwar etwa bei $\nu_x^{LMB}/2$ oder $\nu_y^{LMB}/2$. Dadurch ergibt sich ein maximaler eindeutig mit dem Sensor messbarer Druck.

Die Auflösung eines erfindungsgemässen Sensors ist gegenüber Sensoren mit bekannten Fabry-Perot-Lasern erheblich verbessert. Die erfindungsgemäss erreichte Auflösung ist vergleichbar mit der Auflösung von Sensoren mit DFB-Lasern, die für jeden der zwei orthogonalen Lichtzustände nur einen Longitudinalmode aufweisen.

Vorteilhaft an der hohen Auflösung oder den schmalem zu detektierenden Signalen ist auch, dass zur Erreichung der gleichen Auflösung, die ein aus dem Stand der Technik bekannter Sensor hat, eine kostengünstigere Detektions-Auswerte-Einheit 3 eingesetzt werden kann.

Ein weiterer Vorteil eines erfindungsgemässen Sensors, insbesondere gegenüber Sensoren mit DFB-Lasern, ist darin zu sehen, dass zur Erzielung derselben Laserverstärkung nur eine geringere Dotierung der laserverstärkenden Faser 13 nötig ist, weil die Länge der laserverstärkenden Faser 13 gross gewählt werden kann. Insbesondere können dadurch Cluster-Effekte vermieden werden, die bei hohen Dotierungen auftreten können. Auch ist eine gross wählbare Kavitätslänge und Sensorfaser-Länge vorteilhaft, wenn der genaue Ort des Auftretens der Messgrösse M nicht vorsehbar ist.

Typische Masse und Grössenordnungen für eine beispielhafte Ausführungsform eines erfindungsgemässen Sensor sind beispielsweise:

- Pump-Wellenlänge: 980 nm
- Pumpleistung: 50 mW, entsprechend einem Mehrfachen der Laserschwelle
- 90°-Spleiss auf $\pm 5°$, besser noch $\pm 2°$ genau justiert
- $Er^{3+}$-Konzentration der laserverstärkenden Faser 13: 5000 ppm (Gewicht)
- Länge der Hauptachsen des Kerns der Laserfaser: 3 $\mu$m und 15 $\mu$m
- Unterschied der Brechungsindices von Kern und Ummantelung der Laserfaser: 0.011
- Länge der Laserfaser: 40 cm
- Doppelbrechung der Laserfaser und der FBG 11,12: $5.7 \times 10^{-5}$
- Temperaturempfindlichkeit der Laserfaser: 119 mrad/°C/m
- Druckempfindlichkeit des Drucksensors, wenn 20 cm der Sensorfaser 14 dem Druck ausgesetzt sind: 2.15 Hz/Pa
- Druckempfindlichkeit der Laserfaser: 130 mrad/MPa/m
- maximaler eindeutig messbarer Druck: 60 MPa
- Linienbreite eines einzeln detektierten PMB-Signals: < 1 kHz
- Frequenzabstand $\delta\nu_{PMB}$ benachbarter einzelner PMB-Signale: 130 kHz bei $\Delta\lambda_B$=40 pm und 210 kHz bei $\Delta\lambda_B$=-63pm
- Bragg-Wellenlänge der FBG 11,12: $\lambda_B \approx 1535$ nm
- Unterschied der Bragg-Wellenlängen der FBG 11,12 für s- und f-Polarisation: $\Delta\lambda_{biref} = 60$ pm
- erzielte Auflösung: $4 \times 10^{-6}$ FSR, entsprechend 465 Pa, entsprechend $7.7 \times 10^{-6}$ des maximalen eindeutig messbaren Drucks

Die weiter oben und im folgenden aufgeführten alternativen oder zusätzlichen Merkmale sind optional und untereinander sowie mit den in der Beschreibung dargestellten Ausführungsbeispielen beliebig kombinierbar.

Statt eines Faserlasers 1 kann auch ein anderer Lasertyp eingesetzt werden. Statt einer Sensorfaser 14 mit elliptischem Kernquerschnitt können auch andere, vorzugsweise polarisationerhaltende, Fasern, wie beispielsweise "Panda"-Fasern, "bow-tie"-Fasern, eingesetzt werden. Die Sensorfaser 14 kann auch einen runden Kern und einen nicht-rotationssymmetrischen Querschnitt des Fasermantels haben, zum Beispiel "side-hole"-Fasern, D-förmige Fasern. Zur Umwandlung isotroper Kräfte in anisotrope Kräfte, die dann bei Wechselwirkung mit der Messgrösse M eine Änderung der Doppelbrechung in der Sensorfaser 14 hervorrufen, können auch Transducer eingesetzt werden. Die Sensorfaser 14 kann ganz oder teilweise mit der Messgrösse M zusammenwirken. Die Sensorfaser 14 kann von der laserverstärkenden Faser 13 verschieden sein, ein Teil der laserverstärkenden Faser 13 sein oder mit der laserverstärkenden Faser 13 identisch sein.

Als laserverstärkende Faser 13 kann eine Faser mit einem nicht-rotationssymmetrischen Kern oder auch eine Faser mit rundem Kernquerschnitt verwendet werden. Statt einer $Er^{3+}$-Dotierung kann auch eine $Nd^+$-Dotierung oder ein anderes Mittel zur Laserverstärkung eingesetzt werden.

Ausser der Sensorfaser 14 und der laserverstärkenden Faser 13 kann der Faserlaser 1 auch noch weitere Fasersegmente beinhalten, insbesondere eines oder mehrere, vorzugsweise zwischen der Sensorfaser 14 und der laserverstärkenden Faser 13 angeordnete Zwischenfaserstücke. Besonders vorteilhaft ist eine Anordnung und Ausbildung der Fasern 13,14, wie sie in dem im Zusammenhang mit Fig. 1 beschriebenen Ausführungsbeispiel vorliegt.

Wenn der Sensor mit orthogonalen Polarisationszuständen x,y betrieben wird, weisen diese vorzugsweise dieselbe transversale Raumstruktur auf, vorzugsweise $LP_{01}$. Statt mit orthogonalen Moden der linearen Polarisation kann der Sensor aber auch mit orthogonalen transversalen Raummoden betrieben werden, beispielsweise mit $LP_{01}$ und $LP_{11}^{gerade}$. Dies wurde schon im Zusammenhang mit Fig. 5c und 5d diskutiert. Vorzugsweise werden zwei orthogonale Raummoden mit derselben linearen Polarisation x oder y gewählt. Dem Fachmann ist aufgrund der obigen ausführlichen Diskussion des mit linearer Polarisation arbeitenden Ausführungsbeispiels klar, welche Vorkehrungen er zur Realisierung eines mit transversalen Raummoden arbeitenden Sensors zu treffen hat. Insbesondere werden vorzugsweise Fasern mit elliptischem Kernquerschnitt für die Laserfasern eingesetzt, und als Mittel zur Modenkopplung 15 dient dann vorteilhaft ein seitlich versetzter Faserspleiss 15. Bevorzugte Endreflektoren 11,12 sind auch in diesem Fall Faser-Bragg-Gitter. Die Messgrösse M erzeugt durch Zusammenwirken mit der Sensorfaser 14 eine Veränderung der Doppelbrechung für die zwei aufgrund ihrer transversalen Raumstruktur zueinander orthogonalen Lichtzustände. Es können auch Lichtzustände in einem erfindungsgemässen Sensor Anwendung finden, die aufgrund ihres Polarisationszustandes und aufgrund ihrer transversalen räumlichen Struktur zueinander orthogonal sind. Beispielsweise $LP^x_{01}$ und $LP^y_{11}{}^{gerade}$ oder $LP^x_{11}{}^{gerade}$ und $LP^y_{11}{}^{ungerade}$. Als Mittel zur Modenkopplung dient dann ein seitlich versetzter 90°-Spleiss.

Vorteilhafterweise schwingt das Licht im Faserlaser 1 in genau zwei zueinander orthogonalen Lichtzuständen, das heisst, es gibt nur genau zwei stehende Wellenfelder im Faserlaser 1. Es ist aber auch möglich, dass das Licht in mehr als zwei orthogonalen Lichtzuständen im Faserlaser 1 schwingen kann, beispielsweise $LP_{01}$, $LP_{11}{}^{gerade}$ und $LP_{11}{}^{ungerade}$.

Die FBG 11,12 sind vorzugsweise in doppelbrechende Fasern, beispielsweise in Fasern mit elliptischem Kern, "bowtie"-Fasern oder "Panda"-Fasern, eingebracht. Es ist aber auch möglich, nicht intrinsisch doppelbrechende Fasern dafür zu benutzen, wobei dann eine Doppelbrechung des FBG vorzugsweise durch den Gitterschreib-Vorgang oder durch eine zusätzliche Vorrichtung erzeugt wird. Die zusätzliche Vorrichtung dient dann zur Erzeugung einer permanenten mechanischen Spannung in dem FBG. Die Fasersegmente, in welche die FBG 11,12 eingebracht werden können, sind die laserverstärkende Faser 13, die Sensorfaser 14 oder weitere, vorzugsweise nicht dotierte, Fasersegmente der Laserfaser (Zwischenfaserstücke), die an die laserverstärkende Faser 13, die Sensorfaser 14 oder an ein weiteres Zwischenfaserstück angespleisst sind. Die FBG 11,12 ist vorteilhaft holographisch in die Laserfaser eingeschrieben. Sie können aber auch anders hergestellt sein, beispielsweise durch Ätzen oder durch ein mechanisches Verfahren. Sehr vorteilhaft ist es, wenn beide FBG 11,12 doppelbrechend sind, es ist aber ausreichend, wenn einer der Endreflektoren 11,12 doppelbrechend ist. Die Doppelbrechung der Endreflektoren 11,12 kann auch als modenselektives Reflexionsvermögen der Endreflektoren 11,12 bezeichnet werden, weil das Reflexionsvermögen eines doppelbrechenden FBG von dem Lichtzustand (Polarisation, transversale Raumstruktur) abhängt. Statt FBG 11,12 können auch andersartige wellenlängenselektiv reflektierende Endreflektoren 11,12 benutzt werden, beispielsweise sind dielektrische Spiegel, Spiegel mit einem Farbfilter oder auch photonische Kristalle denkbar. Es können auch zwei verschiedenartig ausgebildete FBG 11,12 oder eine Kombination von einem FBG mit einem andersartigen Endreflektor benutzt werden.

Wellenlängenselektives Reflexionsvermögen der Endreflektoren 11,12 bedeutet hier, dass die Reflexionsspektren der Endreflektoren 11,12 einen oder mehrere Peaks (Maxima) abhängig von der Wellenlänge aufweisen. Oder: Dass nicht einer der Endreflektoren 11,12 eine (nahezu) konstantes Reflexionsvermögen in dem Wellenlängen-Bereich aufweist, in welchem der andere Endreflektor 12,11 ein hohes Reflexionsvermögen aufweist oder einen Peak im Reflexionsspekrum hat. Man kann auch von einem schmalbandigen spektralen Reflexionsvermögen der Endreflektoren 11,12 sprechen. Mehrere Reflexions-Peaks der Endreflektoren bei verschiedenen Wellenlängen sind auch möglich.

Es ist vorteilhaft, wenn einer der Endreflektoren 11,12 um weniger als das die Summe der Breiten der Reflexionspeaks der beiden Endreflektoren 11,12 und insbesondere um weniger als die Hälfte und vorzugsweise weniger als ein Viertel der Summe der Breiten der Reflexionspeaks der beiden Endreflektoren 11,12 gegenüber dem anderen Endreflektor 12,11 verstimmt ist. Als Mass für die Breite eines Reflexionspeaks wird dessen FWHM genommen. Bei einem doppelbrechenden Endreflektor 11,12 ist das die FWHM des Reflexionspeaks für eine der Polarisationen x,y. Falls die Breite der Reflexionspeaks für die eine Polarisation x,y grösser ist als die Breite für die andere Polarisation y,x, so kann der Mittelwert dieser Breiten genommen werden.

Eine gegenseitige Verstimmung der Endreflektoren 11,12 bedeutet, dass der Mittelwert der Zentral-Wellenlängen der Reflexionspeaks des ersten Endreflektors 11 für die beiden orthogonalen Lichtzustände x,y; $LP_{01}$, $LP_{11}^{gerade}$ verschieden ist von dem Mittelwert der Zentral-Wellenlängen der Reflexionspeaks des zweiten Endreflektors 12 für die beiden orthogonalen Lichtzustände x,y; $LP_{01}$, $LP_{11}^{gerade}$. Falls einer der Endreflektoren 11,12 nicht doppelbrechend ist, ist der Mittelwert durch die Zentral-Wellenlänge des einen Reflexionspeaks zu ersetzen. Bei doppelbrechenden Faser-Bragg-Gittern 11,12 gilt:

$$\Delta\lambda_B = (\lambda_{B,f}^{FBG1} + \lambda_{B,s}^{FBG1})/2 - (\lambda_{B,f}^{FBG2} + \lambda_{B,s}^{FBG2})/2.$$

Für nicht-doppelbrechende FBG 11,12 ist $\lambda_B = \lambda_{B,f} = \lambda_{B,s}$. Es versteht sich, dass in dem Fall, dass mindestens einer der Endreflektoren 11,12 mehrere Reflexionspeaks aufweist, stets ein solcher Reflexionspeak gemeint ist, der mindestens eine der Wellenlängen enthält, auf denen der Faserlaser 1 schwingt. Dadurch, dass in dem Faserlaser 1 Licht in zwei zueinander orthogonalen Lichtzuständen ausbreitungsfähig ist, ergibt sich automatisch eine obere Grenze für die gegenseitige Verstimmung der Endreflektoren 11,12. Siehe dazu auch Fig. 3c: Ab einer zu grossen gegenseitigen Verstimmung werden sich die Reflexionspeaks für x-Polarisation nur noch so wenig überlappen, dass die Verluste so gross sind, dass der Faserlaser 1 nicht mehr mit x-polarisiertem Licht schwingt.

Der Wert $\Delta\lambda_B$ der Verstimmung wird vorteilhafterweise bei der Herstellung der Endreflektoren 11,12 gewählt. Es ist auch möglich, $\Delta\lambda_B$ mittels eines Verstimmungsmittels veränderlich einstellbar zu machen. Ausser der oben erwähnten Temperatur kann beispielsweise auch ein einstellbarer, auf mindestens einen der Endreflektoren 11,12 wirkender, mechanischer Stress (Zug- oder Druckkraft) durch das Verstimmungsmittel zur Einstellung von $\Delta\lambda_B$ ausgeübt werden.

Ein erfindungsgemässer Sensor kann praktisch zur Messung einer beliebigen physikalischen Messgrösse M eingesetzt werden. Es muss nur möglich sein, durch eine Änderung der Messgrösse M eine Veränderung der Doppelbrechung in der Sensorfaser 14 hervorzurufen. Beispiele für die Messgrösse M sind: Drücke, insbesondere auch hydrostatische Drücke, mechanische Spannungen (axial oder radial auf die Sensorfaser 14 wirkend), Temperaturen, elektromagnetische Grössen, beispielsweise unter Einsatz einer piezoelektrischen,elektrostriktiven oder magnetostriktiven Ummantelung der Sensorfaser 14.

Die genannten Merkmale können gemeinsam oder auch einzeln oder in beliebiger Kombination vorteilhaft sein.

Bezugszeichenliste

| 1 | Faserlaser |
|---|---|
| 11 | erster Endreflektor; erstes FBG |
| 12 | zweiter Endreflektor; zweites FBG |
| 13 | laserverstärkende Faser |
| 14 | Sensorfaser |
| 15 | Mittel zur Modenkopplung; 90°-Spleiss; seitlich versetzter Spleiss |
| 2 | Pumplichtquelle; Pumplaser |
| 3 | Detektions-Auswerte-Einheit |
| 4 | Faserkoppler |
| 5 | optischer Isolator |

| c | Lichtgeschwindigkeit im Vakuum |
|---|---|
| f | schnelle Achse (fast axis) |

| | |
|---|---|
| FBG | Faser-Bragg-Gitter |
| FSR | Freier spektraler Bereich (free spectral range) |
| FWHM | Volle Breite auf halber Höhe (full width at half maximum) |
| L | Kavitätslänge des Lasers, $L=L_1+L_2$ |
| $L_1$ | Länge des Laserfasersegmentes zwischen dem ersten Endreflektor und dem Mittel zur Modenkopplung |
| $L_2$ | Länge des Laserfasersegmentes zwischen dem zweiten Endreflektor und dem Mittel zur Modenkopplung |
| $LM^x_p$ | Longitudinalmode der Ordnung p in x-Polarisation |
| $LM^y_q$ | Longitudinalmode der Ordnung q in y-Polarisation |
| $LM^{01}_p$ | Longitudinalmode der Ordnung p im transversalen Raummode $LP_{01}$ |
| $LM^{11}_q$ | Longitudinalmode der Ordnung q im transversalen Raummode $LP_{11}^{gerade}$ |
| LMB | Longitudinalmoden-Schwebung (longitudinal mode beating) |
| $LP_{01}$ | transversaler Raummode nullter Ordnung (Grundmode) |
| $LP_{11}^{gerade}$ | transversaler Raummode erster Ordnung |
| M | Messgrösse |
| n | effektiver Brechungsindex |
| p | ganze Zahl; Ordnung der Longitudinalmoden in x-Polarisation |
| PMB | Polarisationsmoden-Schwebung (polarization mode beating) |
| q | ganze Zahl; Ordnung der Longitudinalmoden in y-Polarisation |
| R | Reflexionsvermögen eines Faser-Bragg-Gitters |
| $R_x$ | Reflexionsvermögen eines Faser-Bragg-Gitters für x-Polarisation |
| $R_y$ | Reflexionsvermögen eines Faser-Bragg-Gitters für y-Polarisation |
| s | langsame Achse (slow axis) |
| T | Transmission eines Faser-Bragg-Gitters (normiert); T=1-R |
| TMB | Transversal-Raummoden-Schwebung (transversal mode beating) |
| x | Koordinatenachse; Achse einer linearen Polarisation |
| y | Koordinatenachse; Achse einer linearen Polarisation |
| z | Koordinatenachse; Faserachse |
| | |
| $\varphi$ | (relative) Phasenverschiebung bei Reflexion |
| $\partial\varphi/\partial\nu$ | Dispersion der Phasenverschiebung $\varphi$ |
| $\lambda$ | Wellenlänge |
| $\lambda_B$ | Bragg-Wellenlänge; Wellenlänge eines Reflexionmaximums eines Faser-Bragg-Gitters |
| $\lambda_{B,s}$ | Bragg-Wellenlänge für Licht mit linearer Polarisation parallel zur langsamen Achse |
| $\lambda_{B,f}$ | Bragg-Wellenlänge für Licht mit linearer Polarisation parallel zur schnellen Achse |
| $\Delta\lambda_B$ | Differenz der Bragg-Wellenlängen der beiden FBG; gegenseitige Verstimmung der Endreflektoren |
| $\Delta\lambda_{biref}$ | Wellenlängendifferenz der Reflexionmaxima (Bragg-Wellenlängen) eines FBG für die zwei orthogonalen Lichtzustände x,y |
| $\nu$ | Frequenz |
| $\nu_x^{LMB}$ | Frequenzabstand benachbarter longitudinaler Moden in x-Polarisation |
| $\nu_y^{LMB}$ | Frequenzabstand benachbarter longitudinaler Moden in y-Polarisation |
| $\nu^{x,y}_{p,q}$ | Frequenz eines Longitudinalmode der Ordnung p, q in x-, y-Polarisation |
| $\nu^{x,y}_{p,q}$ | Frequenz eines Longitudinalmode der Ordnung p, q im transversalen Raummode $LP_{01}$, $LP_{11}^{gerade}$ |
| $\delta\nu_{PMB}$ | Frequenzabstand zwischen einzelnen PMB-Signalen einer gegebenen Ordnung |

## Patentansprüche

1. Faseroptischer Sensor zur Messung einer Messgrösse (M), umfassend eine Pumplichtquelle (2), einen Faserlaser (1) und eine Detektions-Auswerte-Einheit (3), wobei der Faserlaser (1)

    (a) einen doppelbrechenden ersten Endreflektor (11) und einen zweiten Endreflektor (12),
    (b) eine laserverstärkende Faser (13) und eine Sensorfaser (14) sowie
    (c) ein Mittel zur Modenkopplung (15) beinhaltet, wobei
    (d) die laserverstärkende Faser (13), die Sensorfaser (14) und das Mittel zur Modenkopplung (15) zwischen dem ersten Endreflektor (11) und dem zweitem Endreflektor (12) angeordnet sind, und wobei
    (e) in dem Faserlaser (1) Licht in zwei, aufgrund ihrer Polarisation und/oder ihrer transversalen Raumstruktur zueinander orthogonalen Lichtzuständen (x,y; $LP'_{01}$,$LP'_{11}$) ausbreitungsfähig ist, wobei
    (f) die zueinander orthogonalen Lichtzustände (x,y; $LP'_{01}$,$LP'_{11}$) durch das Mittel zur Modenkopplung (15) miteinander koppelbar sind, und wobei

(g) mehrere Longitudinalmoden ($LM^x_p$, $LM^x_{p+1}$..., $LM^y_q$, $LM^y_{q+1}$...; $LM^{01}_p$, $LM^{01}_{p+1}$..., $LM^{11}_q$, $LM^{11}_{q+1}$...) in jedem der zwei orthogonalen Lichtzustände (x,y; $LP'_{01}$,$LP'_{11}$) in dem Faserlaser (1) schwingungsfähig sind, und wobei

(h) durch Zusammenwirken der Messgrösse (M) mit der Sensorfaser (14) eine Änderung der Doppelbrechung für die zwei orthogonalen Lichtzustände (x,y; $LP'_{01}$,$LP'_{11}$) in der Sensorfaser (14) erzielbar ist,

**dadurch gekennzeichnet, dass**

(i) der erste Endreflektor (11) gegenüber dem zweiten Endreflektor (12) verstimmt ist.

2. Faseroptischer Sensor gemäss Anspruch 1, **dadurch gekennzeichnet, dass** die Endreflektoren (11,12) derart ausgebildet sind, dass die Dispersion $\partial\varphi_1/\partial v$ der Phasenverschiebung $\varphi$ bei Reflexion an dem ersten Endreflektor (11) plus der Dispersion $\partial\varphi_2/\partial v$ der Phasenverschiebung $\varphi$ bei Reflexion an dem zweiten Endreflektor (12) für einen ersten der zwei Lichtzustände (x,y; $LP'_{01}$,$LP'_{11}$) grösser ist als für den zweiten der zwei Lichtzustände (y,x; $LP'_{11}$,$LP'_{01}$).

3. Faseroptischer Sensor gemäss einem der vorangegangenen Ansprüche,
**dadurch gekennzeichnet, dass**
entweder

(a) die zwei orthogonalen Lichtzustände (x,y; $LP'_{01}$,$LP'^{gerade}_{11}$) zwei lineare Polarisationsmoden (x,y) sind, die insbesondere dieselbe transversale Raumstruktur, insbesondere $LP_{01}$, aufweisen, und das Mittel zur Modenkopplung (15) ein 90°-Faser-Spleiss ist,
oder

(b) die zwei orthogonalen Lichtzustände (x,y; $LP'_{01}$,$LP'^{gerade}_{11}$) zwei transversale Raummoden, insbesondere $LP_{01}$ und $LP^{gerade}_{11}$, sind, die insbesondere dieselbe lineare Polarisation aufweisen, und das Mittel zur Modenkopplung (15) ein seitlich versetzter Faser-Spleiss ist.

4. Faseroptischer Sensor gemäss einem der vorangegangenen Ansprüche, **dadurch gekennzeichnet, dass** in dem Faserlaser (1) Licht in genau zwei orthogonalen Lichtzuständen (x,y; $LP'_{01}$,$LP'^{gerade}_{11}$) ausbreitungsfähig ist.

5. Faseroptischer Sensor gemäss einem der vorangegangenen Ansprüche, **dadurch gekennzeichnet, dass** der erste Endreflektor (11) um weniger als die Summe der Breiten der Reflexionspeaks der beiden Endreflektoren (11,12) gegenüber dem zweiten Endreflektor (12) verstimmt ist, und insbesondere um weniger als die Hälfte der Summe der Breiten der Reflexionspeaks der beiden Endreflektoren (11,12) gegenüber dem zweiten Endreflektor (12) verstimmt ist.

6. Faseroptischer Sensor gemäss einem der vorangegangenen Ansprüche, **dadurch gekennzeichnet**,

(a) dass der zweite Endreflektor (12) doppelbrechend ist, und insbesondere
(b) dass die beiden Endreflektoren (11,12) als Faser-Bragg-Gitter (11,12) ausgebildet sind.

7. Faseroptischer Sensor gemäss einem der vorangegangenen Ansprüche, **dadurch gekennzeichnet**,

(a) dass die laserverstärkende Faser (13) dotiert ist und einen elliptischen Kernquerschnitt aufweist,
(b) dass die beiden Endreflektoren (11,12) als in die laserverstärkende Faser (13) eingeschriebene Faser-Bragg-Gitter (11,12) ausgebildet sind, die bis auf die gegenseitige Verstimmung gleichartig ausgebildet sind,
(c) dass das Mittel zur Modenkopplung (15) in der Mitte der optischen Weglänge zwischen den beiden Endreflektoren (11,12) angeordnet ist,
(d) dass der zwischen einem der Endreflektoren (11;12) und dem Mittel zur Modenkopplung (15) angeordnete Teil der laserverstärkenden Faser (13) mit der Sensorfaser (14) identisch ist.

8. Faseroptischer Sensor gemäss einen der vorangegangenen Ansprüche, **dadurch gekennzeichnet, dass** zur Wahl einer geeigneten gegenseitige Verstimmung der beiden Endreflektoren (11,12) mindestens einer der beiden Endreflektoren (11,12) mit einem Verstimmungsmittel zusammenwirkt, und insbesondere dass durch das Verstimmungsmittel der mindestens eine der beiden Endreflektoren (11,12) einer wählbaren mechanischen Zug- oder Druckkraft und/oder einer wählbaren Temperatur aussetzbar ist.

9. Faseroptischer Sensor gemäss einem der vorangegangenen Ansprüche, **dadurch gekennzeichnet, dass** die Messgrösse (M) ein Druck, insbesondere ein hydrostatischer Druck, eine Temperatur, eine mechanische Spannung oder eine elektromagnetische Grösse, insbesondere eine elektrische Grösse, ist.

10. Verfahren zur Messung einer Messgrösse (M),

(a) wobei eine Pumplichtquelle (2) einen Faserlaser (1) optisch pumpt, welcher Faserlaser (1) einen doppelbrechenden ersten Endreflektor (11) und einen zweiten Endreflektror (12) aufweist,

(b) so dass in dem Faserlaser (1) mehrere Longitudinalmoden ($LM^x_p$, $LM^x_{p+1}$..., $LM^y_q$, $LM^y_{q+1}$...; $LM^{01}_p$, $LM^{01}_{p+1}$..., $LM^{11}_q$, $LM^{11}_{q+1}$...) in jedem von zwei aufgrund ihrer Polarisation und/oder ihrer transversalen Raumstruktur zueinander orthogonalen Lichtzuständen (x,y; $LP'_{01}$, $LP'_{11}$) schwingen,

(c) wobei die zueinander orthogonalen Lichtzustände (x,y; $LP'_{01}$, $LP'_{11}$) durch ein Mittel zur Modenkopplung (15) miteinander gekoppelt werden, und

(d) wobei die Messgrösse (M) mit einer Sensorfaser (14) des Faserlasers (1) derart zusammenwirkt, dass in der Sensorfaser (14) eine Änderung der Doppelbrechung für die zwei orthogonalen Lichtzustände (x,y; $LP'_{01}$, $LP'^{gerade}_{11}$) erzeugt wird,

**dadurch gekennzeichnet**,

(e) dass als Endreflektoren (11,12) zwei gegeneinander verstimmte Endreflektoren (11,12) verwendet werden, und

(f) dass mindestens ein Signal(PMB,TMB) detektiert und ausgewertet wird, das durch die Interferenz zwischen genau zwei aufgrund ihrer Polarisation und/oder ihrer transversalen Raumstruktur zueinander orthogonalen Longitudinalmoden ($LM^x_p$, $LM^y_q$; $LM^{01}_p$, $LM^{11}_q$) entsteht.

**Fig. 1**

**Fig. 2a**

**Fig. 2b**

**Fig. 3a**

**Fig. 3c**

**Fig. 3b**

**Fig. 3d**

**Fig. 4a**

**Fig. 4b**

**Fig. 5a**

**Fig. 5b**

**Fig. 5c**

**Fig. 5d**

**Fig. 6**

**Fig. 7**

**Europäisches Patentamt**

## EUROPÄISCHER RECHERCHENBERICHT

Nummer der Anmeldung

EP 02 40 5353

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 00 77562 A (OPTOPLAN AS) 21. Dezember 2000 (2000-12-21) * die gesamte Druckschrift * * Abbildungen 1-3 * --- | 1 | G01D5/34 G01L11/02 |
| A | GB 2 299 203 A (OPTOPLAN SA) 25. September 1996 (1996-09-25) * die gesamte Druckschrift * * Abbildungen 1-5 * --- | 1 | |
| A | GB 2 323 441 A (BRITISH AEROSPACE PLC) 23. September 1998 (1998-09-23) * die gesamte Druckschrift * ----- | 1 | |

RECHERCHIERTE SACHGEBIETE (Int.Cl.7)

G01D
G01L
G10D

Der vorliegende Recherchenbericht wurde für alle Patentansprüche erstellt

| Recherchenort | Abschlußdatum der Recherche | Prüfer |
|---|---|---|
| DEN HAAG | 30. September 2002 | Visser, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 02 40 5353

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2002

| Im Recherchenbericht angeführtes Patentdokument | | Datum der Veröffentlichung | Mitglied(er) der Patentfamilie | | Datum der Veröffentlichung |
|---|---|---|---|---|---|
| WO 0077562 | A | 21-12-2000 | NO<br>AU<br>EP<br>WO | 992912 A<br>5115700 A<br>1192500 A1<br>0077562 A1 | 18-12-2000<br>02-01-2001<br>03-04-2002<br>21-12-2000 |
| GB 2299203 | A | 25-09-1996 | NO<br>US | 951052 A<br>5844927 A | 23-09-1996<br>01-12-1998 |
| GB 2323441 | A | 23-09-1998 | US | 6018160 A | 25-01-2000 |

EPO FORM P0461

Für nähere Einzelheiten zu diesem Anhang : siehe Amtsblatt des Europäischen Patentamts, Nr.12/82